Europäisches Patentamt

European Patent Office

Office européen des brevets

(19)

(11) Numéro de publication : **0 575 514 B1**

(12)                    **FASCICULE DE BREVET EUROPEEN**

(45) Date de publication du fascicule du brevet :
28.06.95 Bulletin 95/26

(51) Int. Cl.⁶ : **G01N 13/02, G05D 21/02**

(21) Numéro de dépôt : **92908636.1**

(22) Date de dépôt : **12.03.92**

(86) Numéro de dépôt international :
**PCT/FR92/00227**

(87) Numéro de publication internationale :
**WO 92/16824 01.10.92 Gazette 92/25**

(54) **PROCEDE D'ANALYSE PHYSICO-CHIMIQUE FONDE SUR LE CONTROLE DE TENSIONS INTERFACIALES, ET APPAREIL CORRESPONDANT.**

(30) Priorité : **14.03.91 FR 9103105**

(43) Date de publication de la demande :
**29.12.93 Bulletin 93/52**

(45) Mention de la délivrance du brevet :
**28.06.95 Bulletin 95/26**

(84) Etats contractants désignés :
**BE CH DE DK ES GB IT LI LU NL SE**

(56) Documents cités :
**EP-A- 0 237 221
EP-A- 0 317 736
FR-A- 2 632 728
Journal of Colloid and Interface Science, vol. 101, no. 1, septembre 1984, Academic Press, Inc., H.H.J. Girault et al. : "The measurement of interfacial tension of pendant drops using a video image profile digitizer", pp. 257-266
Chemistry and Physics of Lipids, vol. 45, 1987, Elsevier Scientific Publ. Ireland Ltd., S. Nury et al. : "Lipase kinetics at the triacylglycerol-water interface using surface tension measurements", pp. 27-37**

(73) Titulaire : **UNIVERSITE DE TOULON ET DU VAR, LABORATOIRE D'OPTOELECTRONIQUE - L.O.E.
Avenue de l'Université
F-83130 La Garde (FR)**

(72) Inventeur : **RICHOU, Jacques
112, chemin de la Barre
F-83000 Toulon (FR)**
Inventeur : **GRIMALDI, Michel Les Pépinières du Las
Bâtiment D2
243, av. des Routes
F-83200 Toulon (FR)**
Inventeur : **VERGER, Robert
230, avenue de la Panouse
F-13009 Marseille (FR)**
Inventeur : **RIVIERE, Claude
Le Clos des Olivades,7-10 Avenue de la Gare
F-13260 Cassis (FR)**
Inventeur : **BOIS, André (Le Brasilia App. 1415)
35, Boulevard Barral
F-13008 Marseille (FR)**
Inventeur : **NURY, Sylvie
6, allée des Cerisiers
F-78112 Fourqueux (FR)**

(74) Mandataire : **Schmit, Christian Norbert Marie
Cabinet Ballot-Schmit
7, rue Le Sueur
F-75116 Paris (FR)**

EP 0 575 514 B1

## Description

La tension interfaciale entre deux liquides non miscibles, ou entre un liquide et un fluide ambiant, est une grandeur physique très utilisée dans différents domaines scientifiques et techniques. Elle représente l'énergie mise en oeuvre par les forces de cohésion inter-moléculaires sur une interface entre un liquide et un milieu ambiant. Un milieu ambiant est un milieu également fluide dans lequel le liquide considéré est plongé. Le liquide et le milieu ambiant ne sont pas miscibles. C'est, très concrètement, la force qui tend à rassembler les liquides en gouttes dont la forme serait sphérique si la pesanteur ne les déformait pas.

La tension interfaciale est exprimée en terme de force par unité de longueur, par exemple en Newton/m ou millinewton/m.

Pour un couple donné liquide pur / milieu ambiant pur, dans des conditions fixes de température et de pression, la tension interfaciale est une grandeur constante.

Mais la présence de certains agents chimiques sur l'interface peut modifier la structure de l'interface et par suite la valeur de la tension interfaciale. Ces agents sont alors dits "tensio-actifs".

La mesure des tensions interfaciales peut donc servir à évaluer l'activité tensio-active de certains agents chimiques, ou indirectement à mesurer la concentration de ces agents dans un liquide.

Les applications de ces mesures sont nombreuses, notamment dans les industries pétrolières, chimiques, alimentaires, cosmétiques, etc.

A titre d'exemple, ces mesures sont utiles pour la mise au point de détergents ou d'émulsifiants efficaces; elles sont utiles pour la mise au point de produits de dispersion du pétrole brut en cas de marée noire; et encore pour l'étude de réactions physiologiques enzymatiques.

On sait calculer la valeur de la tension interfaciale entre un liquide et un milieu ambiant à partir des mesures (optiques) de la forme et des dimensions d'une goutte de liquide à symétrie axiale verticale, plongée dans le milieu ambiant et accrochée à l'extrémité d'une aiguille creuse qui a servi à former la goutte. Une telle méthode est connue des documents FR-A-2 632 728, EP-A-0 237 221, et EP-A-0 317 736.

La goutte prend une forme qui résulte de l'équilibre entre les forces de pesanteur, la poussée d'Archimède, les forces de tension interfaciales, et la pression due à la courbure de l'interface.

Il apparaît ainsi que pour deux liquides donnés, le détachement de la goutte de son support dépend de la tension interfaciale du rayon de l'aiguille creuse, et de l'angle de contact. Ce dernier est directement lié à la matière formant l'aiguille.

En analysant la forme et les dimensions de la goutte, on peut déterminer d'une manière absolue la valeur de la tension interfaciale. Il existe en effet une relation entre la valeur de la tension interfaciale et les paramètres géométriques caractérisant la forme de la goutte. Cette relation est définie par une équation dite "de Laplace".

C'est ce qu'on appelle le calcul de la tension interfaciale par la méthode de la "goutte pendante". On sait faire également ce calcul à partir de la forme d'une goutte posée sur une surface solide horizontale.

Toutefois, l'équation de Laplace n'admet pas de solution analytique pour l'obtention de la valeur de la tension interfaciale. Elle ne peut donc être résolue que de manière indirecte.

Deux grandes sortes d'approches ont été utilisées par le passé pour obtenir une valeur de la tension interfaciale à partir de la connaissance de la forme de la goutte. La première, rapide mais peu précise, consiste à déterminer la position de deux points caractéristiques du contour, pour en déduire une valeur approchée de la tension interfaciale. La deuxième, plus précise mais lente, consiste à utiliser tous les points du contour de la goutte et à procéder par approximations successives, jusqu'à trouver une valeur de tension pour laquelle la forme théorique de la goutte est aussi proche que possible de la forme réelle.

Les solutions classiques de détermination de la tension interfaciale par la méthode de la goutte pendante ou de la goutte posée sont décrites dans plusieurs documents. Par exemple, l'article de H. H. GIRAULT, D.J. SCHIFFRIN, et B.D. SMITH dans Journal of Colloid and Interface Science, Vol 101, N°1, Sept 1984, "The Measurement of Interfacial Tension of Pendant Drops Using a Video Image Profile Digitizer" explique en détail les formules qui sont à la base de ces calculs.

L'article des mêmes auteurs, intitulé "Drop Image Processing for Surface and Interfacial Tension Measurements" dans Journal of Electroanalysis Chemistry, 137, pp. 207, 217, année 1982, donne également tous les détails sur les calculs de tension interfaciale par la méthode de la goutte pendante.

Dans l'art antérieur, on a remarqué que non seulement la valeur absolue de la tension interfaciale pouvait être intéressante, mais aussi les variations de cette tension sous l'effet d'agents tensio-actifs. Des études ont montré en particulier une corrélation très étroite entre la concentration en agent tensio-actif dans le milieu ambiant et la vitesse de variation initiale de la tension interfaciale au moment de la formation de la goutte. On peut donc mesurer un paramètre très important qui est le pouvoir tensio-actif d'un agent ou la concentration de cet agent dans le milieu (ou dans la goutte) si on sait mesurer la vitesse de variation initiale de la tension interfaciale.

Un des problèmes rencontrés est qu'on ne sait pas mesurer directement cette vitesse initiale. Pour l'obtenir, il faut d'abord calculer à des intervalles de temps réguliers la valeur de la tension interfaciale, à partir de la forme de la goutte à ces instants (au fur et à mesure que cette forme varie par suite de l'action des agents tensio-actifs); puis il faut tracer point par point une courbe de variation de la tension calculée; et enfin il faut extrapoler cette courbe vers le point de départ pour en déduire la vitesse initiale.

C'est une méthode très lente, surtout si la tension interfaciale est mesurée par la méthode précise de comparaison de profil théorique et profil réel de la goutte.

C'est pourquoi on propose ici un nouveau procédé d'analyse du comportement d'une interface entre un liquide et un fluide dans lequel ce liquide n'est pas miscible. Le procédé selon l'invention est un procédé dynamique, c'est-à-dire qu'il s'intéresse non pas principalement à des caractéristiques stables dans le temps mais surtout à l'évolution de ces caractéristiques au fur et à mesure d'un processus qu'on cherche à étudier.

Selon l'invention, on propose un procédé consistant à introduire un liquide de manière contrôlée dans un milieu ambiant, à calculer la tension interfaciale, et à agir sur un organe d'introduction du liquide dans un sens tendant à amener la tension interfaciale à une valeur désirée.

En pratique, on va former une goutte de liquide dans un milieu ambiant à partir d'une aiguille pénétrant dans le milieu ambiant, on va calculer la tension interfaciale entre le liquide et le milieu ambiant à partir de mesures faites sur la goutte, et on va asservir l'introduction de liquide par l'aiguille en fonction de la valeur de la tension interfaciale calculée.

L'idée mère de l'invention consiste donc essentiellement à contrôler la quantité de liquide injectée pour former la goutte, en fonction de la tension interfaciale calculée, alors que jusqu'à maintenant on faisait des analyses à partir d'une goutte de volume constant.

La mesure est alors dynamique : si la tension interfaciale calculée tend à se modifier, on agira sur l'aiguille d'injection pour modifier en tant que de besoin la quantité de liquide injectée, le but étant de maintenir la tension interfaciale à une valeur désirée.

Dans la pratique, on cherchera à maintenir la tension interfaciale à une valeur constante, au moins au cours d'une partie de l'expérience, mais on peut aussi imaginer des cas où on asservit l'injection de liquide de manière à faire suivre une loi désirée à la tension interfaciale.

Ce procédé selon l'invention est donc tout particulièrement adapté à l'analyse en temps réel du comportement d'agents tensio-actifs : l'agent tensio-actif tend à modifier la tension interfaciale en raison de l'adsorption de l'agent à la surface de la goutte. Avec la régulation selon l'invention, on peut augmenter rapidement la surface externe et le volume de la goutte de liquide pour tendre à maintenir constante la tension interfaciale malgré l'adsorption de produit à la surface. Cette augmentation de surface génère en effet de nouvelles surfaces libres sur lesquelles peuvent venir se fixer les agents tensio-actifs. Le comportement réel de l'agent tensio-actif peut donc être évalué bien mieux que dans le cas où une goutte unique est progressivement recouverte par l'agent tensio-actif. On peut en particulier évaluer la quantité d'agent adsorbée par unité de temps sur une interface libre.

Dans une utilisation concrète, on procédera de la manière suivante : on forme une goutte, on calcule la valeur de la tension interfaciale de la goutte à des instants successifs déterminés, sans action sur l'injection de liquide; puis, à un instant donné, on établit et on stocke comme valeur de tension interfaciale de consigne la tension interfaciale calculée à ce moment; enfin, on autorise à partir de là l'action de l'organe d'injection, dans un sens tendant à maintenir à cette valeur de consigne la tension interfaciale calculée à chaque instant.

L'invention propose également un appareil d'analyse pour la mise en oeuvre de l'invention. L'appareil comporte un moyen de formation d'une goutte de liquide dans un milieu ambiant, un moyen d'analyse de la forme et des dimensions de la goutte, un moyen de calcul de la tension interfaciale à partir de ces mesures, et un moyen pour asservir la quantité de liquide introduite en fonction de la tension interfaciale calculée. Le moyen pour modifier la quantité de liquide comporte par exemple une seringue reliée à une aiguille pénétrant dans le milieu ambiant, et un moteur pas-à-pas pour actionner la seringue.

Les moyens pour analyser la forme et les dimensions de la goutte sont optiques et électroniques.

Cette idée d'asservissement de la quantité de liquide sur la tension interfaciale peut être mise en oeuvre à condition que le calcul de la tension interfaciale soit effectué en temps réel : il faut pouvoir modifier la quantité de liquide injectée dès que l'on s'aperçoit que la tension interfaciale s'écarte de la consigne imposée.

C'est pourquoi il est très important de disposer d'un procédé de mesure rapide. Le calcul à partir de deux points du contour de la goutte est possible (voir les articles précités). Toutefois, il est insuffisamment précis, et parfois il ne s'applique qu'à des formes de gouttes particulières (gouttes avec points d'inflexion, près de se détacher de l'aiguille).

Inversement, les procédés de mesure fondés sur l'utilisation des coordonnées de tous les points du contour sont plus précis mais beaucoup plus lents. Ils font en effet appel à une comparaison itérative de contours calculés et de contour réel de la goutte. Pour résumer, on peut dire que la tension interfaciale est obtenue de la manière suivante : la forme exacte de la goutte est mesurée à partir d'une caméra vidéo et d'un traitement numérique effectué sur le signal issu de la caméra; une forme théorique de goutte est calculée en fonction d'un paramètre inconnu variable qui est la tension interfaciale, paramètre auquel on donne une valeur initiale approchant si possible la valeur de tension interfaciale escomptée. La forme théorique et la forme réelle sont comparées, de préférence en utilisant la méthode des moindres carrés. Le paramètre inconnu est modifié et on réitère le calcul jusqu'à ce que la forme théorique corresponde au mieux à la forme réelle de la goutte. La valeur de tension interfaciale réelle est alors celle qui fait le mieux correspondre la théorie et la réalité.

On comprendra que cette méthode est très lente; un ordinateur à processeur lent mettra plusieurs dizaines de secondes avant de trouver une valeur assez précise. Mais le résultat est plus précis qu'avec une méthode qui n'utilise que deux points.

On souhaiterait dans de nombreux cas avoir une bonne précision tout en réduisant beaucoup la durée d'obtention de la mesure.

C'est pourquoi on propose, selon un deuxième aspect de l'invention, un nouveau procédé de calcul de tension interfaciale, utilisable notamment dans le procédé de régulation indiqué ci-dessus.

On propose ici un procédé de mesure de tension interfaciale dans lequel on utilise un calcul qui ne fait pas appel à des comparaisons itératives de formes de goutte calculées et réelle, et qui pourtant utilise tous les points du contour et non pas seulement deux points ou quelques points comme les méthodes rapides connues à ce jour.

Le procédé comprend les opérations suivantes :
- détermination optique de la forme d'une goutte d'un liquide dans un milieu ambiant, et notamment extraction des coordonnées des points du contour numérisé de la goutte;
- pour chaque point d'indice i du contour numérisé, de coordonnées horizontale et verticale $x_i$ et $z_i$ à partir du sommet de la goutte : calcul de trois valeurs $u_i$, $v_i$, $w_i$ faisant intervenir seulement les coordonnées du point i, le volume de la goutte entre le sommet et le plan d'ordonnée $z_i$, et l'angle par rapport à l'horizontale d'une tangente à la goutte au point i;
- sommation pour tous les points i d'au moins cinq des carrés et produits suivants : $u_i^2$, $v_i^2$, $w_i^2$, $u_i v_i$, $v_i w_i$, $w_i u_i$, les sommations fournissant respectivement des sommes S1, S2, S3, S4, S5, S6;
- résolution d'un système de deux équations linéaires à deux inconnues A et B prises parmi les trois suivantes :

$$A.S1 + B.S3 = S5$$
$$A.S3 + B.S2 = S4$$
$$A.S5 + B.S4 = S6$$

- calcul de la tension interfaciale à partir de A et de constantes connues qui sont la constante de gravité g et la différence de densité entre la goutte et le milieu ambiant.

Ce procédé selon l'invention ne fait donc pas appel à une comparaison itérative de formes calculées et forme réelle de goutte, et pourtant il utilise tous les points du contour.

Un exemple détaillé de mise en oeuvre de ce procédé sera donné dans la suite, appliqué à une goutte pendante, étant entendu que ce procédé peut aussi s'appliquer à une goutte posée. On verra en particulier que les valeurs de $u_i$, $v_i$, $w_i$ peuvent être respectivement :

$u_i$ : la différence entre d'une part le volume partiel de la goutte divisée par le nombre Pi et d'autre part le produit $x_i^2 . z_i$

$v_i$ : le carré $x_i^2$

$w_i$ : le produit de $x_i$ par le sinus de l'angle E formé avec l'horizontale par la tangente au contour au point d'indice i.

La tension interfaciale est alors égale à g(D1-D2)/2A, où D1-D2 représente la différence entre les densités de la goutte et du milieu ambiant.

Le procédé selon l'invention est très rapide et permet d'obtenir une valeur de tension en moins d'une seconde avec un microordinateur personnel, avec une précision pratiquement égale à celle qui est obtenue dans la méthode d'approximation itérative d'un contour calculé et d'un contour réel. Un micro-ordinateur personnel est par exemple un microordinateur de type dit compatible IBM, muni d'un microprocesseur du type 286 de la société américaine INTEL CORPORATION, assisté d'un co-processeur arithmétique de type 287 de la même société, et d'une mémoire de travail de 640 kilo-octets. Ce procédé peut donc être utilisé non seulement pour des mesures précises de tensions interfaciales ou de courbes de variation de tension interfaciale, mais aussi très avantageusement dans le procédé de régulation défini ci-dessus.

D'autres caractéristiques et avantages de l'invention apparaîtront à la lecture de la description détaillée qui suit et qui est faite en référence aux dessins annexés dans lesquels :
- la figure 1 représente une goutte pendante à l'extrémité d'une aiguille d'injection;
- la figure 2 représente l'évolution de la forme d'une goutte dans un milieu tensio-actif;
- la figure 3 représente des courbes typiques de variation de tension interfaciale en présence d'agents tensio-actifs;
- la figure 4 représente le principe de l'invention;
- la figure 5 représente une mise en oeuvre pratique de l'invention;
- la figure 6 représente les variables utilisées pour le calcul de la tension.

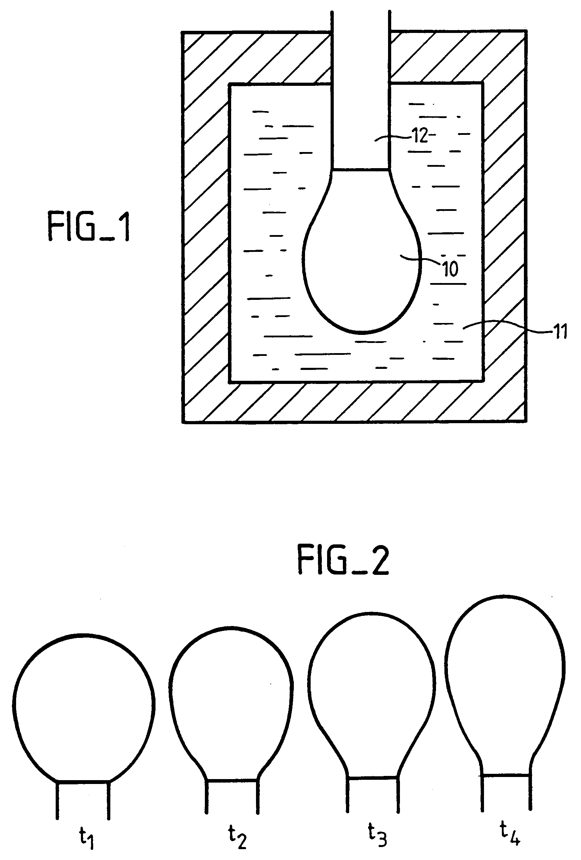

Sur la figure 1, on a représenté à titre d'exemple une goutte de liquide 10 pendue au bout d'une aiguille 12 qui a servi à amener le liquide pour former la goutte. La goutte est immergée dans un fluide 11 (en général un autre liquide, dans lequel le premier n'est pas miscible). La forme de la goutte est la résultante de l'équilibre entre les forces de pesanteur (qui tendent à étirer la goutte) et les forces de cohésion dues à la tension interfaciale, qui tendent à ramener la goutte à une forme sphérique.

L'invention peut fonctionner avec des gouttes qui pendent vers le bas (prédominance de la pesanteur par rapport à la poussée d'Archimède) ou vers le haut (prédominance de la poussée d'Archimède).

La figure 2 représente la déformation progressive de la goutte au cours du temps sous l'action d'agents tensio-actifs. La goutte s'allonge; au bout d'un certain temps elle peut même se détacher de l'aiguille. Le temps de résidence de la goutte sur l'aiguille a d'ailleurs été utilisé pour évaluer la concentration en agent tensio-actif du milieu ambiant.

On notera que l'invention peut s'appliquer dans le cas où l'agent tensio-actif est contenu dans le milieu ambiant, ou bien dans le cas où il est contenu dans la goutte elle-même.

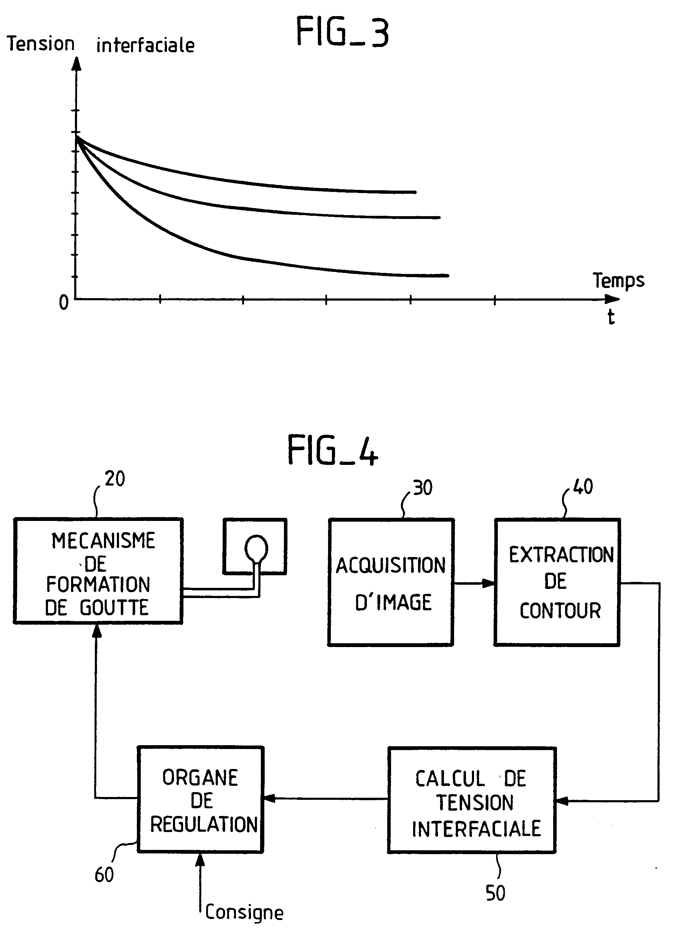

La figure 3 représente des courbes typiques de variation de la tension interfaciale en fonction du temps, en présence d'agents tensio-actifs. On voit que la tension interfaciale diminue progressivement sous l'action de l'agent tensio-actif. C'est typiquement le cas par exemple dans une réaction enzymatique de lipases sur une goutte d'huile végétale. Les trois courbes représentées correspondent à différents dosages d'agent tensio-actif dans le milieu ambiant.

Le procédé d'analyse original selon l'invention est rappelé en référence à la figure 4. Il consiste à modifier la quantité de liquide présente dans la goutte en fonction d'un calcul de tension interfaciale effectué en temps réel à partir des dimensions de la goutte.

La mesure des variations de la quantité de liquide est une indication précieuse sur la cinétique de la réaction; elle fournit en particulier une bonne évaluation de la vitesse de migration de l'agent tensio-actif vers l'interface entre goutte et milieu ambiant : au fur et à mesure qu'on injecte du liquide, de nouvelles surfaces de contact deviennent disponibles entre le liquide et le milieu ambiant; l'agent tensio-actif migre sur ces surfaces alors que le reste de l'interface est relativement encombré par les produits de la réaction. La mesure du débit de liquide est donc très représentative de l'activité de l'agent (ou de sa concentration). Cette mesure de débit peut être obtenue facilement à partir de la forme et des dimensions de la goutte qui sont de toutes façons nécessaires pour le calcul en temps réel de la tension interfaciale.

Le procédé qu'on utilisera en pratique consistera essentiellement à asservir le débit d'une manière telle que la tension interfaciale reste constante et égale à une valeur de consigne. La valeur de consigne pourra être une valeur calculée à partir de la forme de la goutte en début d'expérience.

La figure 4 rappelle simplement symboliquement qu'il faut prévoir en principe : un mécanisme 20 de formation de goutte apte à être commandé pour injecter une quantité de liquide variable pendant l'expérience; un dispositif 30 d'acquisition d'image de la goutte; un moyen 40 d'extraction de la forme et des dimensions de la goutte à partir de l'image acquise; un moyen de calcul 50 de la tension interfaciale à partir de la forme et des dimensions de la goutte; et un mécanisme de régulation 60, recevant la valeur de tension calculée et une valeur de consigne (en principe constante) et agissant sur le mécanisme de formation de goutte. Sur la figure 4, la valeur de consigne est représentée comme étant fournie de manière indépendante des moyens de calcul de tension 50; toutefois, on peut envisager qu'elle soit fournie par le moyen 50, dans le cas où on veut asservir la tension calculée à une valeur de tension précédemment calculée. C'est le cas notamment lorsqu'on ne met pas en oeuvre l'asservissement dès le début de la réaction; on commence à calculer la tension interfaciale à partir de la formation de la goutte, et on suit l'évolution de la tension à chaque instant de calcul; puis on stocke à titre de valeur de consigne une valeur calculée à un moment donné, et on met en service l'asservissement pour tendre à maintenir la tension interfaciale au voisinage de cette valeur calculée.

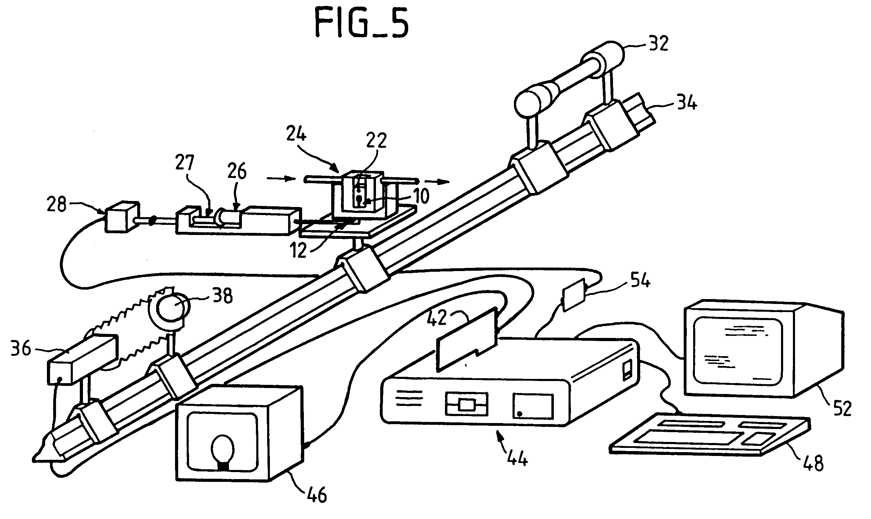

La figure 5 représente un exemple de réalisation pratique d'un appareil selon l'invention.

Le mécanisme de formation de goutte comprend une cuvette de mesure 22 transparente (en polycarbonate), placée dans une enceinte thermostatique 24 en alliage d'aluminium. Une perforation au fond de la cuvette permet le passage d'une aiguille de formation de goutte à l'intérieur de l'enceinte. L'aiguille est reliée à une seringue d'injection 26 dont le piston 27 peut être déplacé de façon automatique par un moteur pas-à-pas 28, par exemple par l'intermédiaire d'un système de vis-écrou.

Une source de lumière 32, montée sur un banc optique 34 et placée d'un côté de la cuvette 22, éclaire la goutte 10. Une caméra vidéo 36 à senseur CCD est placée de l'autre côté de l'enceinte pour permettre l'acquisition d'une image de la goutte; bien entendu, l'enceinte thermostatique est échancrée sur le trajet des rayons optiques pour que la goutte puisse être observée à travers les parois de la cuvette 22 qui est transparente.

De préférence, la source de lumière comprend une source proprement dite, laser ou autre, et des lentilles de collimation pour former un faisceau parallèle éclairant la goutte. Un objectif est placé entre la goutte et la caméra pour définir un grandissement désiré de l'image de la goutte.

La caméra constitue l'organe principal des moyens d'acquisition d'image 30.

Le signal vidéo issu de la caméra sera traité pour effectuer l'extraction du contour de la goutte; puis le calcul de la tension interfaciale sera effectué à partir de la forme et des dimensions de la goutte et enfin une régulation de cette tension par rapport à une valeur de consigne sera effectuée. L'ensemble de ces opérations seront exécutées par un ordinateur programmé en conséquence, cet ordinateur ayant une sortie capable d'agir sur le moteur pas-à-pas 28.

Un microordinateur personnel suffira en général à faire ces traitements de signaux et calculs, mais on peut envisager des cas où la cinétique de la réaction est suffisamment rapide pour nécessiter des moyens de calcul plus importants. En effet, il faut rappeler que le principe de l'invention exige une régulation en temps réel pour asservir la croissance de la goutte à une valeur de tension interfaciale calculée en temps réel.

Le signal vidéo est numérisé et stocké dans une interface de traitement d'image 42 couplée à un microordinateur 44. Cette interface comprend en particulier une mémoire de l'image numérisée. Dans un exemple, une carte électronique de numérisation d'image IMAGING TECHNOLOGY PFG 100+ peut être utilisée pour numériser des signaux délivrés par une caméra à CCD de la société RTC, référence 56470, équipée d'un objectif 135 BOYER. Une visualisation permanente du contenu de la mémoire d'image peut être effectuée sur un moniteur 46 relié à l'interface 42.

Le microordinateur 44 est couplé à un clavier de commande 48 et à un écran de visualisation 52. Il possède enfin une sortie pour commander un circuit de puissance 54 relié au moteur pas-à-pas 28.

Le microordinateur effectue en permanence l'extraction des coordonnées des points du contour de la goutte. A partir de là il peut fournir une valeur de tension interfaciale. Cette valeur est comparée à une valeur de consigne. Si la tension calculée est inférieure à la valeur de la consigne, le moteur pas-à-pas est actionné pour injecter une quantité de liquide supplémentaire.

Avec les moyens de calcul que permettent les microordinateurs personnels, et en utilisant des algorithmes de calcul de tension interfaciale suffisamment rapides, on peut par exemple obtenir une valeur de tension interfaciale toutes les secondes environ. Pour beaucoup d'études de réactions en présence d'agents tensio-actifs, cette durée est suffisamment courte pour qu'on puisse réguler en temps réel la quantité de liquide injectée par la seringue.

L'une des données importantes qui peut être recueillies avec ce procédé selon l'invention est la quantité d'agent tensio-actif qui migre sur l'interface par unité de temps. Cette quantité est indirectement mesurée à partir de l'augmentation de surface de goutte nécessaire par unité de temps pour conserver constante la valeur de la tension interfaciale. La surface peut être calculée à chaque instant à partir de la forme du contour numérisé stocké en mémoire.

On va maintenant décrire en détail le procédé préféré selon l'invention pour l'obtention d'une valeur de tension interfaciale, procédé qui peut être utilisé de manière tout-à-fait avantageuse dans tous les cas où on souhaite obtenir rapidement une valeur de tension.

Le procédé est applicable en partant d'une goutte pendante, ou également d'une goutte posée. Il sera décrit ci-après à propos d'une goutte pendante. De très légères adaptations sont nécessaires pour une goutte posée, puisque l'équation de Laplace est légèrement différente.

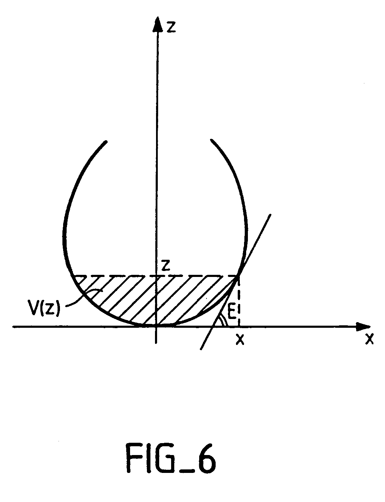

Les bases mathématiques qui justifient le procédé sont données ci-après en référence à la figure 6 qui rappelle les notations utilisées.

Les coordonnées d'un point du contour sont définies par rapport à l'apex de la goutte, c'est-à-dire le sommet pour une goutte dirigée vers le haut, la base pour une goutte pendante vers le bas. Le paramètre x est l'abscisse horizontale d'un point du contour; le paramètre z est l'ordonnée verticale de ce point. L'angle E est l'angle formé avec l'horizontale par la tangente au contour au point de coordonnées x,z.

La formule de Laplace qui définit complètement le contour de la goutte est la suivante :

$$(1/x).d(x \sin E)/dx = 2/b - c.z$$

b est le rayon de courbure à l'apex; et

c est la constante de capillarité du couple liquide/milieu ambiant; $c = g.(D1-D2)/gamma$

où : g est la constante de gravité;

D1-D2 est la différence de densité entre le liquide et le milieu ambiant;

gamma est la tension interfaciale que l'on cherche;

Si on intègre de 0 à x l'équation de Laplace, on aboutit à l'équation :

$$x \sin E = x^2/b - c.int(x.z.dx)$$

où l'expression int(x.z.dx) représente l'intégrale de 0 à x du produit x.z.dx.

Or cette intégrale complexe qui fait intervenir à la fois l'abscisse et l'ordonnée est d'une certaine manière liée au volume de la goutte situé entre l'apex et le plan d'ordonnée z.

En effet, ce volume V(z) de la goutte peut s'écrire sous forme de la différence entre le volume V1(x,z) = $pi.x^2.z$ d'un cylindre principal de rayon x et de hauteur z et la somme V2(x,z) des volumes élémentaires de cylindres creux de rayon x, épaisseur dx, et hauteur z situés entre ce cylindre principal et le contour de la goutte. Cette somme est justement égale à 2pi.int(x.z.dx).

$$V(z) = pi.x^2.z - 2.pi.int(x.z.dx)$$

Ceci permet d'écrire l'équation de Laplace intégrée de 0 à x sous la forme :

$$V(z)/pi = x^2.z - (2/c)(x^2/b - x.\sin E)$$

Si on pose les équations suivantes :

A = c/2 (inversement proportionnel à la tension interfaciale gamma),

B = 1/b (inverse du rayon de courbure à l'apex),
$u = V(z) /pi - x^2.z$
$v = x^2$
$w = x.sinE$

alors l'équation de Laplace intégrée de 0 à x s'exprime simplement sous la forme :

$$A.u + B.v = w$$

Cette équation doit être bien entendu vérifiée quel que soit la valeur du point de coordonnées x et z, A et B étant des constantes pour une forme de goutte donnée.

On comprendra aisément qu'on peut trouver les constantes A et B en prenant deux points quelconques sur le contour de la goutte et en calculant pour ces deux points les triplets u', v', w' (premier point) et u″, v″, w″ (deuxième point), puis en résolvant les deux équations à deux inconnues A et B.

Toutefois, avec deux points la précision est limitée, comme on l'a déjà expliqué à propos de l'art antérieur, ne serait-ce qu'à cause de la numérisation du contour avec une précision limitée.

L'idée mère de l'invention est d'utiliser tous les points du contour de la goutte et de rechercher la valeur de A et B qui satisfait au mieux toutes les équations A.u + B.v = w qui en résultront.

On doit alors pouvoir obtenir une bonne précision, sans pour autant être obligé de faire des calculs répétés de forme de goutte théorique comme on le faisait dans l'art antérieur. Le calcul d'une forme de goutte est en effet un calcul long.

C'est pourquoi l'invention propose essentiellement le procédé de mesure de tension interfaciale suivant :

- on détermine optiquement la forme de la goutte en extrayant les coordonnées x et z des points du contour de la goutte (le nombre de points dépend de la résolution du senseur optique);
- pour chaque point d'indice i, et de coordonnées $x_i$, $z_i$, on calcule trois valeurs $u_i$, $v_i$, $w_i$ faisant intervenir uniquement, outre des constantes connues, les coordonnées du point i, le volume de la goutte entre l'apex et le plan horizontal d'ordonnée $z_i$, et l'angle par rapport à l'horizontale de la tangente à la goutte au point i;
- et on détermine les valeurs de A et B qui vérifient au mieux l'équation $A.u_i + B.v_i = w_i$ pour l'ensemble des points du contour.
- à partir de A et de constantes connues, on calcule la tension interfaciale gamma.

On peut constater par conséquent :

1./ qu'il n'y a pas à déterminer une forme de goutte théorique à partir de l'intégration de l'équation de Laplace; et encore moins à le faire plusieurs fois de suite par itération;

2./ la seule intégrale qu'on doit calculer est celle liée au volume de la goutte; et lorsqu'on passe d'un point au suivant, l'intégrale utilise le volume précédemment calculé, de sorte qu'il n'y a pas une intégrale à faire à chaque point mais une simple addition si on fait le calcul pour des points dans l'ordre le long du contour.

De plus, selon une solution particulièrement avantageuse de l'invention, on peut calculer les valeurs A et B qui vérifient au mieux les équations $A.u_i + B.v_i = w_i$ pour l'ensemble des points du contour, grâce à une méthode très simple.

La méthode va être donnée, puis sa justification mathématique.

On somme pour tous les points i au moins cinq des carrés et produits suivants : $u_i^2$, $v_i^2$, $u_iv_i$, $v_iw_i$, $w_iu_i$, $w_i^2$, les sommations fournissant respectivement la somme S1 des carrés $u_i^2$, la somme S2 des carrés $v_i^2$, les sommes S3, S4, S5 de produits $u_iv_i$, $v_iw_i$, $w_iu_i$, et la somme S6 des carrés $w_i^2$, .

Puis on résout un système de deux équations à deux inconnues A et B pris parmi les trois équations suivantes :

$$A.S1 + B.S3 = S5$$
$$A.S3 + B.S2 = S4$$
$$A.S5 + B.S4 = S6$$

et on calcule la tension interfaciale gamma à partir de l'équation gamma = g.(D1-D2)/2.A.

La justification mathématique se fonde sur le principe d'une optimisation du choix de A et B par la méthode des moindres carrés appliquée à la quantité $A.u_i + B.v_i - w_i$.

Cette méthode consiste à dire ceci : si on souhaite que l'égalité $A.u_i + B.v_i = w_i$ soit vérifiée au mieux pour tous les points, une solution est de minimiser la somme des carrés des erreurs sur cette égalité, c'est-à-dire la somme des carrés de $(A.u_i + B.v_i - w_i)$.

Tout d'abord, si l'égalité $A.u_i + B.v_i = w_i$ était vérifiée pour tous les i, les égalités suivantes seraient également vérifiées :

$A.u_i^2 + B.v_i.u_i = w_i.u_i$ (multiplication par $u_i$

$A.u_i.v_i + B.v_i^2 = w_i.v_i$ (multiplication par $v_i$

$A.u_i.w_i + B.v_i.w_i = w_i^2$ (multiplication par $w_i$

égalités qui peuvent se réécrire (multiplication par A et B respectivement pour les deux premières) :

$$A^2.u_i^2 + A.B.v_i.u_i = A.w_i.u_i$$
$$A.B.u_i.v_i + B^2.v_i^2 = B.w_i.v_i$$
$$w_i^2 = A.u_i.w_i + B.v_i.w_i$$

Serait alors vérifiée également la somme de ces trois égalités, c'est-à-dire que :

$$A^2.u_i^2 + 2.A.B.v_i.u_i + B^2.v_i^2 + w_i^2 = 2.A.u_i.w_i + 2.B.w_i.v_i$$

ce qui n'est pas autre chose que

$$(A.u_i + B.v_i - w_i)^2 = 0$$

Cela veut dire que les trois équations suivantes

$$A.u_i^2 + B.v_i.u_i = w_i.u_i$$
$$A.u_i.v_i + B.v_i^2 = w_i.v_i$$
$$A.u_i.w_i + B.v_i.w_i = w_i^2$$

pourraient alors être remplacées par deux quelconques des trois équations et l'égalité supplémentaire

$$(A.u_i + B.v_i - w_i)^2 = 0$$

Toutes ces égalités restent évidemment vraies si on les somme pour tous les points i.

Les trois égalités deviennent alors :

$$A.S1 + B.S3 = S5$$
$$A.S3 + B.S2 = S4$$
$$A.S5 + B.S4 = S6$$

Quant à l'égalité supplémentaire, si on la somme pour tous les points i, elle exprime justement la condition de minimisation de la somme des carrés de l'erreur de l'égalité de base $A.u_i + B.v_i = w_i$ pour tous les points i.

En d'autre mots, cela veut dire que si on choisit comme critère d'optimisation du choix de A et B la méthode des moindres carrés, appliquée à l'égalité de base $A.u_i + B.v_i = w_i$, alors A et B peuvent être obtenus tout simplement par résolution de deux équations linéaires à deux inconnues, choisies parmi les trois suivantes :

$$A.S1 + B.S3 = S5$$
$$A.S3 + B.S2 = S4$$
$$A.S5 + B.S4 = S6$$

La solution de deux équations à deux inconnues est évidemment beaucoup plus simple et rapide que n'importe quelle méthode d'optimisation par itération.

C'est ce qui permet d'obtenir une mesure très rapide de la tension interfaciale, et entre autres une possibilité de régulation en temps réel comme expliqué ci-dessus, tout en faisant intervenir tous les points du contour de la goutte.

A étant obtenu, il ne reste qu'à calculer la tension interfaciale gamma d'après la relation donnée plus haut entre A et gamma. Cette valeur gamma est la valeur que l'on peut admettre comme grandeur mesurée introduite dans l'organe de régulation 60. La valeur de consigne peut être une valeur de gamma mesurée à un certain moment après le début de l'expérience.

On dispose aussi, à cause de l'évolution de gamma, de la valeur initiale de gamma. De plus, lorsque l'asservissement fonctionne, on connaît la quantité d'agent tensio-actif adsorbée par unité de temps, par exemple en comptant le nombre de pas qu'on a imposé au moteur pendant cette unité de temps. Mais de préférence, on mesure la quantité d'agent adsorbée à partir des images elles-mêmes. En effet, disposant de tous les éléments, on peut calculer la surface de la goutte à partir de l'image en considérant que la goutte admet une symétrie de révolution. On fait ainsi l'économie d'un capteur supplémentaire.

**Revendications**

1. Procédé d'analyse du comportement d'une interface entre un liquide (10) et un milieu ambiant (11), comportant

   - l'introduction contrôlée de liquide dans le milieu ambiant en formant une goutte du liquide à l'extrémité d'une aiguille plongée dans le milieu,
   - un calcul de la tension interfaciale entre ce liquide et ce milieu ambiant à partir de la forme et des dimensions de la goutte, caractérisé en ce qu'il comporte
   - une action d'asservissement sur un organe d'introduction du liquide (12,26), dans un sens tendant à amener la tension interfaciale à une valeur désirée, par comparaison de la tension calculée à cette valeur désirée,
   - et une mesure de caractéristiques de réaction entre ce liquide et ce milieu ambiant à partir d'une mesure du débit d'introduction.

2. Procédé d'analyse selon la revendication 1, caractérisé en ce qu'on agit sur un organe d'injection (26) couplé à l'aiguille pour injecter une quantité de liquide supplémentaire dans la goutte si la tension interfaciale est plus faible que la valeur désirée.

3. Procédé selon la revendication 2, caractérisé en ce qu'on forme une goutte, on calcule la valeur de la tension interfaciale de la goutte à des instants successifs déterminés, sans action sur l'injection de liquide, et à un instant donné, on établit comme valeur de tension interfaciale désirée la tension interfaciale calculée à ce moment, et on autorise l'action de l'organe d'injection pour maintenir ultérieurement à cette valeur désirée la valeur de tension interfaciale calculée au cours de la réaction.

4. Procédé selon l'une des revendications 2 à 3, caractérisé en ce que on mesure le débit à partir de la forme et des dimensions de la goutte.

5. Procédé selon l'une des revendications 1 à 4, caractérisé en ce que le liquide et/ou le milieu ambiant contient un agent tensio-actif.

6. Appareil d'analyse du comportement interfacial d'un liquide dans un milieu ambiant fluide, comportant un moyen (30) de formation d'une goutte dans un milieu ambiant, un moyen (40) d'analyse de la forme et des dimensions de la goutte, un moyen (50) de calcul de la tension interfaciale à partir de la forme et des dimensions de la goutte, caractérisé en ce qu'il comporte en outre un moyen (60) pour modifier la quantité de liquide injectée dans la goutte en fonction de l'écart entre la tension interfaciale calculée et une valeur de tension interfaciale désirée et un moyen pour mesurer la quantité injectée.

7. Appareil selon la revendication 6, caractérisé en ce que le moyen pour modifier la quantité de liquide comporte un seringue (26) reliée à une aiguille (12) pénétrant dans le milieu ambiant (11), et un moteur pas-à-pas (28) pour actionner la seringue.

8. Appareil selon l'une des revendications 6 et 7, caractérisé en ce qu'il comporte un moyen de comparaison de la tension interfaciale calculée avec une valeur de consigne fixe.

9. Appareil selon l'une des revendications 6 à 8, caractérisé en ce que le moyen de mesure de la quantité injectée comporte la mesure de la forme et des dimensions de la goutte.

10. Appareil selon l'une des revendications 6 à 9, caractérisé en ce qu'il comporte des moyens pour permettre initialement un calcul de la tension interfaciale sans réagir sur la quantité de liquide injectée, des moyens pour stocker la tension calculée en vue de s'en servir ultérieurement à titre de valeur de consigne, et des moyens pour ensuite calculer la tension interfaciale et modifier la quantité de liquide injectée dans un sens tendant à diminuer l'écart entre la tension calculée et la valeur de consigne.

11. Procédé selon l'une des revendications 1 à 4 caractérisé en ce que le calcul de la tension interfaciale entre une goutte de liquide et un milieu ambiant comprend les opérations suivantes:
   - on détermine optiquement la forme de la goutte en extrayant les coordonnées x et z des points du contour de la goutte;
   - pour chaque point d'indice i, et de coordonnées $x_i$, $z_i$, on calcule trois valeurs $u_i$, $v_i$, $w_i$ faisant intervenir uniquement, outre des constantes connues, les coordonnées du point i, le volume de la goutte entre l'apex et le plan horizontal d'ordonnée $z_i$, et l'angle par rapport à l'horizontale de la tangente à la goutte au point i;
   - et on détermine les valeurs de A et B qui vérifient au mieux l'équation $A.u_i + B.v_i = W_i$ pour l'ensemble des points du contour.
   - à partir de A et de constantes connues, on calcule la tension interfaciale gamma qui est inversement proportionnelle à A.

12. Procédé selon la revendication 11, caractérisé en ce que l'on somme pour tous les points i au moins cinq des carrés et produits suivants: $u_i^2$, $v_i^2$, $u_iv_i$, $v_iw_i$, $w_iu_i$, $w_i^2$, les sommations fournissant respectivement les sommes S1, S2, S3, S4, S5, S6; puis on résout un système de deux équations à deux inconnues A et B prises parmi les trois équations suivantes:

$$A.S1 + B.S3 = S5$$
$$A.S3 + B.S2 = S4$$
$$A.S5 + B.S4 = S6$$

et on calcule la tension interfaciale gamma à partir de l'équation gamma = g. (D1-D2)/2.A, où g est la constante de gravité et D1-D2 est la différence de densité entre le liquide et le milieu ambiant.

13. Procédé selon l'une des revendications 11 et 12, caractérisé en ce que
   $x_i$ et zi sont les coordonnées horizontales d'un point i du contour par rapport à l'apex de la goutte;
   $u_i$ est la différence entre d'une part le volume partiel de la goutte divisée par le nombre Pi et d'autre part le produit $x_i^2.z_i$
   $v_i$ est le carré $x_i^2$
   $w_i$ est le produit $x_i$ par le sinus de l'angle E formé avec l'horizontale par la tangente au contour au point d'indice i.

14. Procédé selon l'une quelconque des revendications 1 à 4 ou 11 à 13, caractérisé en ce qu'on mesure une grandeur représentative de la variation du volume de liquide injecté dans la goutte par unité de temps, en comparant les images de cette goutte à des instants successifs.

15. Procédé selon l'une quelconque des revendications 1 à 4 ou 11 à 13 caractérisé en ce qu'on mesure une grandeur représentative de la variation de la surface de la goutte en comparant les images de cette goutte à des instants successifs.


**Patentansprüche**

1. Verfahren zur Analyse des Verhaltens einer Grenzfläche zwischen einer Flüssigkeit (10) und einem Umgebungsmilieu (11), mit:
   - gesteuertem Einführen der Flüssigkeit in das Umgebungsmilieu unter Ausbildung eines Flüssigkeitstropfens am Ende einer in das Milieu eingetauchten Nadel,
   - Berechnung der Grenzflächenspannung zwischen der Flüssigkeit und dem Umgebungsmilieu ausgehend von der Form und den Dimensionen des Tropfens, dadurch gekennzeichnet, daß es aufweist:
   - eine Steuereinwirkung auf ein Flüssigkeitseinführteil (12, 26) in einer Richtung, in der die Grenzflächenspannung dazu neigt, einen gewünschten Wert anzunehmen, durch Vergleich der berechneten Spannung mit der gewünschten Spannung und
   - einer Messung der Reaktionseigenschaften zwischen dieser Flüssigkeit und diesem Umgebungsmilieu, ausgehend von einer Messung der Einführleistung.

2. Verfahren zur Analyse nach Anspruch 1, dadurch gekennzeichnet, daß auf ein mit der Nadel gekoppeltes Einspritzteil (26) eingewirkt wird, um eine zusätzliche Flüssigkeitsmenge in den Tropfen einzuspritzen, wenn die Grenzflächenspannung geringer als der gewünschte Wert ist.

3. Verfahren nach Anspruch 2, dadurch gekennzeichnet, daß ein Tropfen ausgebildet wird, daß der Wert der Grenzflächenspannung des Tropfens zu aufeinander folgenden Zeitpunkten berechnet wird, ohne Einwirkung auf die Flüssigkeitseinspritzung und daß zu einem vorgegebenen Zeitpunkt als gewünschter Wert der Grenzflächenspannung die zu diesem Zeitpunkt berechnete Grenzflächenspannung festgelegt wird und daß die Betätigung des Einspritzteils ermöglicht wird, um anschließend an diesen gewünschten Wert den Wert der während der Reaktion berechneten Grenzflächenspannung einzustellen.

4. Verfahren nach einem der Ansprüche 2 bis 3, dadurch gekennzeichnet, daß die Leistung ausgehend von der Form und den Dimensionen des Tropfens berechnet wird.

5. Verfahren nach einem der Ansprüche 1 bis 4, dadurch gekennzeichnet, daß die Flüssigkeit und-/oder das Umgebungsmilieu einen die Spannung beeinflussenden Stoff enthalten.

6. Vorrichtung zur Analyse des Grenzflächenverhaltens einer Flüssigkeit in einem fluidförmigen Umgebungsmilieu, mit einer Anordnung (30) zur Ausbildung eines Tropfens in dem Umgebungsmilieu, einer Anordnung (40) zur Analyse der Form und der Dimensionen des Tropfens, einer Anordnung (50) zur Berechnung der Grenzflächenspannung ausgehend von der Form und den Dimensionen des Tropfens, dadurch gekennzeichnet, daß sie außerdem eine Anordnung (60) aufweist zur Veränderung der Menge der in den Tropfen eingespritzten Flüssigkeit als Funktion des Unterschiedes zwischen der berechneten Grenzflächenspannung und einem gewünschten Wert der Grenzflächenspannung sowie eine Anordnung aufweist zur Messung der eingespritzten Menge.

7. Vorrichtung nach Anspruch 6, dadurch gekennzeichnet, daß die Anordnung zur Veränderung der Flüssigkeitsmenge eine Spritze (26) aufweist, die mit einer Nadel (12) verbunden ist, welche in das Umgebungsmilieu (11) eindringt sowie einen Schrittmotor (28) zur Betätigung der Spritze aufweist.

8. Vorrichtung nach einem der Ansprüche 6 und 7, dadurch gekennzeichnet, daß sie eine Anordnung zum Vergleichen der berechneten Grenzflächenspannung mit einem festgelegten Referenzwert aufweist.

9. Vorrichtung nach einem der Ansprüche 6 bis 8, dadurch gekennzeichnet, daß die Anordnung zur Messung der eingespritzten Menge die Messung der Form und die Dimensionen des Tropfens umschließt.

10. Vorrichtung nach einem der Ansprüche 6 bis 9, dadurch gekennzeichnet, daß sie eine Anordnung aufweist, um zu Beginn eine Berechnung der Grenzflächenspannung durchzuführen, ohne auf die Menge der eingespritzten Flüssigkeit einzuwirken, eine Anordnung aufweist zur Speicherung der berechneten Spannung, um diese später als Referenzwert einzusetzen und eine Anordnung aufweist, um anschließend die Grenzflächenspannung zu berechnen und die Menge der eingespritzten Flüssigkeit zu verändern in einer Richtung, in der der Unterschied zwischen der berechneten Spannung und dem Referenzwert verringert wird.

11. Verfahren nach einem der Ansprüche 1 bis 4, dadurch gekennzeichnet, daß die Berechnung der Grenzflächenspannung zwischen einem Flüssigkeitstropfen und einem Umgebungsmilieu die folgenden Schritte aufweist:
- optische Bestimmung der Form des Tropfens unter Festlegung der Koordinaten X und Z von Umfangspunkten des Tropfens,
- Berechnung dreier Werte $u_1$, $v_1$, $w_1$ für jeden Indexpunkt i und die Koordinaten $x_1$, $z_1$ unter ausschließlicher Berücksichtigung, außer den bekannten Konstanten, der Koordinaten des Punktes i, des Volumens des Tropfens zwischen dem Scheitelpunkt und der waagrechten Ebene der Koordinate $z_i$ sowie den Winkel der Tangente an den Tropfen im Punkt i zur Horizontalen,
- Bestimmung der Werte von A und B, welche am besten die folgende Gleichung erfüllen: $A.u_i + B.v_i = W_i$ für die Gesamtheit der Umfangspunkte,
- Berechnung der Grenzflächenspannung Gamma, die zu A umgekehrt proportional ist, ausgehend von A und den bekannten Konstanten.

12. Verfahren nach Anspruch 11, dadurch gekennzeichnet, daß für alle Punkte i wenigstens fünf der folgenden Quadrate und Produkte aufsummiert werden: $u_i^2$, $v_i^2$, $u_iv_i$, $v_iw_i$, $w_iu_i$, $w_i^2$, wobei diese Aufsummierungen die Summen S1, S2, S3, S4, S5, S6 liefern; anschließend wird ein System von zwei Gleichungen mit zwei Unbekannten A und B gelöst, welche aus den folgenden drei Gleichen ausgewählt werden:

$$A.S1 + B.S3 = S5$$
$$A.S3 + B.S2 = S4$$
$$A.S5 + B.S4 = S6$$

und Berechnung der Grenzflächenspannung Gamma, ausgehend von der Gleichung Gamma = g. (D1-D2)/2.A, wobei g die Gravitationskonstante ist und D1-D2 der Unterschied der Dichte zwischen der Flüssigkeit und dem Umgebungsmilieu ist.

13. Verfahren nach einem der Ansprüche 11 und 12, dadurch gekennzeichnet, daß
$x_i$ und $z_i$ die waagrechten Koordinaten eines Punktes i des Umfangs bezüglich des Scheitelpunktes des Tropfens sind;
$u_i$ die Differenz zwischen einerseits dem Teilvolumen des Tropfens dividiert durch die Anzahl Pi und andererseits dem Produkt $x_i^2.z_i^2$ ist,
$v_i$ das Quadrat $x_i^2$ ist,
$w_i$ das Produkt $x_i$ mit dem Sinus des Winkels E ist, welcher durch die Tangente an den Umfang im Indexpunkt i mit der Horizontalen gebildet wird.

14. Verfahren nach einem der Ansprüche 1 bis 4 oder 11 bis 13, dadurch gekennzeichnet, daß eine Größe gemessen wird, welche die Variation des in den Tropfen eingespritzten Flüssigkeitsvolumens pro Zeiteinheit darstellt, durch Vergleich der Bilder dieses Tropfens zu aufeinanderfolgenden Zeitpunkten.

15. Verfahren nach einem der Ansprüche 1 bis 4 oder 11 bis 13, dadurch gekennzeichnet, daß eine Größe gemessen wird, welche die Veränderung der Tropfenoberflächen darstellt durch Vergleich der Bilder dieses Tropfens zu aufeinander folgenden Zeitpunkten.

## Claims

1. Method for analysing the behaviour of an interface between a liquid (10) and a surrounding medium (11), including
   - the controlled introduction of liquid into the surrounding medium by forming a drop of the liquid at the end of a needle inserted into the medium,
   - a calculation of the interfacial surface tension between this liquid and this surrounding medium from the shape and dimensions of the drop,

   characterised in that it includes
   - a feedback action on a device introducing the liquid (12, 26), in a direction tending to bring the interfacial surface tension to a desired value, by comparing the calculated tension with this desired value, and
   - a measurement of the characteristics of the reaction between this liquid and this surrounding medium using a measurement of the rate of introduction.

2. Analysis method according to Claim 1, characterised in that an injection device (26) coupled to the needle is acted on in order to inject an additional quantity of liquid in the drop if the interfacial surface tension is lower than the desired value.

3. Method according to Claim 2, characterised in that a drop is formed, the value of the interfacial surface tension of the drop is calculated at predetermined successive moments, without acting on the liquid injection, and, at a given moment, the interfacial surface tension calculated at this moment is established as the desired interfacial surface tension value, and the action of the injection device is enabled, so as subsequently to maintain at this desired value the interfacial surface tension value calculated during the reaction.

4. Method according to one of Claims 2 to 3, characterised in that the rate is measured from the shape and dimensions of the drop.

5. Method according to one of Claims 1 to 4, characterised in that the liquid and/or the surrounding medium contain a surfactant.

6. Apparatus for analysing the interfacial behaviour of a liquid in a surrounding fluid medium, including a means (30) for forming a drop in a surrounding medium, a means (40) for analysing the shape and dimensions of the drop, and a means (50) for calculating the interfacial surface tension from the shape and dimensions of the drop, characterised in that it also includes a means (60) for modifying the quantity of liquid injected in the drop according to the difference between the calculated interfacial surface tension and a desired interfacial surface tension value, and a means for measuring the quantity injected.

7. Apparatus according to Claim 6, characterised in that the means for modifying the quantity of liquid includes a syringe (26) connected to a needle (12) entering the surrounding medium (11), and a stepping motor (28) for operating the syringe.

8. Apparatus according to one of Claims 6 and 7, characterised in that it includes a means for comparing the calculated interfacial surface tension with a fixed reference value.

9. Apparatus according to one of Claims 6 to 8, characterised in that the means for measuring the quantity injected includes the measurement of the shape and dimensions of the drop.

10. Apparatus according to one of Claims 6 to 9, characterised in that it includes means for initially calculating the interfacial surface tension without reacting on the quantity of liquid injected, means for storing the calculated tension with a view to using it subsequently as a reference value, and means for then calculating the interfacial surface tension and modifying the quantity of liquid injected in a direction tending to reduce the difference between the calculated surface tension and the reference value.

11. Method according to one of Claims 1 to 4, characterised in that the calculation of the interfacial surface tension between a drop of liquid and a surrounding medium comprises the following operations:
    - the shape of the drop is determined optically by extracting the x and z coordinates of the points on the contour of the drop;
    - for each point of index i, and coordinates $x_i$, $z_i$, three values $u_i$, $v_i$, $w_i$, are calculated, using solely, in addition to the known constants, the coordinates of the point i, the volume of the drop between the apex and the horizontal plane of ordinate $z_i$, and the angle, with respect to the horizontal, of the tangent to the drop at point i;
    - and the values of A and B which best satisfy the equation $A.u_i + B.v_i = W_i$ for all the points on the contour;
    - from A and known constants, the interfacial surface tension gamma which is inversely proportional to A is calculated.

12. Method according to Claim 11, characterised in that, for all the points i, at least five of the following squares and products are summed: $u_i^2$, $v_i^2$, $u_i v_i$, $v_i w_i$, $w_i u_i$, $w_i^2$, the summations supplying respectively the sums S1, S2, S3, S4, S5, S6; then a system of two equations with two unknowns A and B taken from the following three equations is resolved:

$$A.S1 + B.S3 = S5$$
$$A.S3 + B.S2 = S4$$
$$A.S5 + B.S4 = S6$$

and the interfacial surface tension gamma is calculated from the equation gamma = g. (D1-D2)/2.A, where g is the gravitation constant and D1-D2 is the difference in density between the liquid and the surrounding medium.

13. Method according to one of Claims 11 and 12, characterised in that
    $x_i$ and $z_i$ are the horizontal coordinates of a point i on the contour with respect to the apex of the drop;
    $u_i$ is the difference between on the one hand the partial volume of the drop divided by the number Pi and on the other hand the product $x_i^2.z_i$
    $v_i$ is the square $x_i^2$
    $w_i$ is the product of $x_i$ and the sine of the angle E formed with the horizontal by the tangent to the contour at the point of index i.

14. Method according to any one of Claims 1 to 4 or 11 to 13, characterised in that a quantity representing the variation in the volume of liquid injected in the drop per unit of time is measured, by comparing the images of this drop at successive moments.

15. Method according to any one of Claims 1 to 4 or 11 to 13, characterised in that a quantity representing the variation in surface area of the drop is measured by comparing the images of this drop at successive moments.

FIG_1

FIG_2

# FIG_3

# FIG_4

# FIG_5

EP 0 575 514 B1

FIG_6